# EUROPEAN PATENT SPECIFICATION

(11) **EP 3 523 526 B1**
(45) Date of publication and mention of the grant of the patent: **01.12.2021**
(21) Application number: 16784541.1
(22) Date of filing: 05.10.2016
(51) Int. Cl.: F02B 55/02, F02B 63/04, F16F 3/00, F16F 15/121

(54) **ENGINE-GENERATOR SET**
MOTORGENERATOR
ENSEMBLE MOTEUR-GÉNÉRATEUR

(43) Date of publication of application: 14.08.2019
(73) Proprietor: Wärtsilä Finland Oy, 65100 Vaasa (FI)
(72) Inventor: SUVANTO, Samuel, 65100 Vaasa (FI); LOKASAARI, Tero, 65100 Vaasa (FI)
(74) Representative: Berggren Oy
(86) International application number: PCT/FI2016/050690
(87) International publication number: WO 2018/065657

(56) References cited:
- EP-A1- 2 693 170
- EP-A2- 1 119 092
- WO-A1-92/02741
- DE-A1-102006 038 981
- US-A- 2 627 733
- US-A- 3 155 070
- US-A- 3 183 731

## Description

### Technical field of the invention

The present invention relates to an engine-generator set that comprises a generator for producing electricity and an internal combustion engine that is coupled to a shaft of the generator for driving the generator, as defined in the preamble of claim 1.

### Background of the invention

Large internal combustion engines, such as ship or power plant engines, are typically arranged on base frames, which are supported against a floor of a power plant or an engine room of a ship. A base frame is typically made of steel or reinforced concrete. Resilient mounts are typically used between the base frame and a supporting surface, such as the hull of a ship or a floor of a power plant. If an engine is coupled to a generator for generating electricity at a power plant, for a propulsion system of a ship, or for another electric system of a ship, the engine and the generator are often arranged on a common base frame.

A problem with common base frames or rigidly connected separate base frames is that vibrations of the engine are transmitted to the generator causing fatigue failures. Usually fatigue failures are concentrated around the areas of mounting points of the generators, but they can occur also in many other locations.

Patent application US 2001/0008343 A1 discloses one solution to the above mentioned problem. In the arrangement known from the application, each of the engine and the generator is provided with an annular flange, and the flanges are connected together rubber-elastically by means of a rubber-elastic elastomer layer. A problem with this solution is that the possibilities for optimizing the characteristics of the coupling are limited. Another problem is that rubber hardens in time, which weakens the vibration isolation properties.

### Summary of the invention

The object of the present invention is to provide an improved engine-generator set that comprises a generator for producing electricity, an internal combustion engine that is coupled to a shaft of the generator for driving the generator and a vibration isolation arrangement that is configured to carry torques about the shaft of the generator for maintaining a mutual angular position of the engine and the generator and to reduce transmission of vibrations from the engine to the generator. The characterizing features of the engine-generator set according to the invention are given in the characterizing part of claim 1.

In the engine-generator set according to the invention, the vibration isolation arrangement comprises at least two attachment elements connecting the engine to the generator, each attachment element comprising a first attachment portion that is attached to the engine and a second attachment portion that is attached to the generator, wherein each attachment element further comprises a resilient portion connecting the first attachment portion to the second attachment portion, the resilient portion having a shape that is configured to make the resilient portion less stiff in the direction of the shaft of the generator than in a direction that is perpendicular to the direction of the shaft.

Because of the vibration isolation arrangement, the engine and the generator coupled to the engine can be arranged on separate base frames and vibrations of the engine are not directly transmitted to the generator. It is also possible that base frames are omitted and lighter support structures are used for supporting the engine and/or the generator. Because the attachment elements are stiffer in a direction that is perpendicular to the direction of the shaft of the generator than in the direction of the shaft, the attachment elements are flexible in the direction of the shaft but can resist torsion. The attachment elements of the vibration isolation arrangement carry the required static torque between the engine and the generator, but isolate the generator from the vibrations of the engine. Risk of fatigue failures caused to the generator is thus reduced. Because the shape of the resilient portion is utilized to make the attachment element resilient, the attachment elements can be one-piece parts. For example an alloy can be used as the material of the attachment elements. Rubber or similar materials are thus not needed. The construction of the attachment elements can be simple and durable. The characteristics of the attachment elements can be easily modified by changing the shape and dimensions. Also problems relating to hardening of rubber can be avoided.

According to an embodiment of the invention, the resilient portion of the attachment element is made of a sheet material. With a sheet material, it is easy to construct attachment elements that are resilient in one direction but stiff in at least one other direction.

According to an embodiment of the invention, the attachment element has an elongated shape, the longitudinal axis of the attachment element being perpendicular to the direction of the shaft of the generator.

According to an embodiment of the invention, the attachment element is a one-piece part.

The resilient portion can have many different shapes. For instance, the resilient portion can be corrugated.

According to an embodiment of the invention, the resilient portion comprises at least a first section and a second section adjacent to the first section in the direction of the shaft of the generator, each of the first section and the second section being configured to be less stiff in the direction of the shaft of the generator than in a direction that is perpendicular to the direction of the shaft. The second section can have different dimensions than the first section. With different dimensions, the characteristics of the attachment element can be modified.

According to an embodiment of the invention, the resilient portion comprises two U-shaped sections. The U-shaped sections can be rounded.

According to an embodiment of the invention, the resilient portion has a shape of a square wave.

According to an embodiment of the invention, the resilient portion has a shape of a sinusoidal wave.

According to an embodiment of the invention, the resilient portion has a rounded cross-sectional shape in a direction that is perpendicular to the direction of the shaft of the generator.

According to an embodiment of the invention, two attachment elements of the vibration isolation arrangement are arranged on opposite sides of the shaft of the generator. With such an arrangement, the attachment elements can effectively carry torques about the shaft. By providing the arrangement with at least four resilient elements, lighter resilient elements can be used.

According to an embodiment of the invention, the engine is arranged on a base frame and the generator is arranged on a separate base frame and the first attachment portion of the attachment element is attached to the base frame of the engine and the second attachment portion is attached to the base frame of the generator.

Alternatively, the first attachment portion of the attachment element is attached to the engine block of the engine and the second attachment portion is attached to the body of the generator. With this construction, the engine and the generator do not need to be provided with base frames, but lighter support structures can be used. The vibration isolation arrangement can also form a cover for the flywheel of the engine and for the coupling between the engine and the generator.

### Brief description of the drawings

Embodiments of the invention are described below in more detail with reference to the accompanying drawings, in which
Fig. 1 shows an engine-generator set according to an embodiment of the invention,
Fig. 2 shows a perspective view of a vibration isolation arrangement of an engine-generator set according to another embodiment of the invention,
Fig. 3 shows a side view of the arrangement of fig. 2,
Fig. 4 shows a top view of the arrangement of fig. 2,
Fig. 5 shows an end view of the arrangement of fig. 2, and
Figs. 6a-6d show different possible shapes for an attachment element used in the vibration isolation arrangement.

### Description of embodiments of the invention

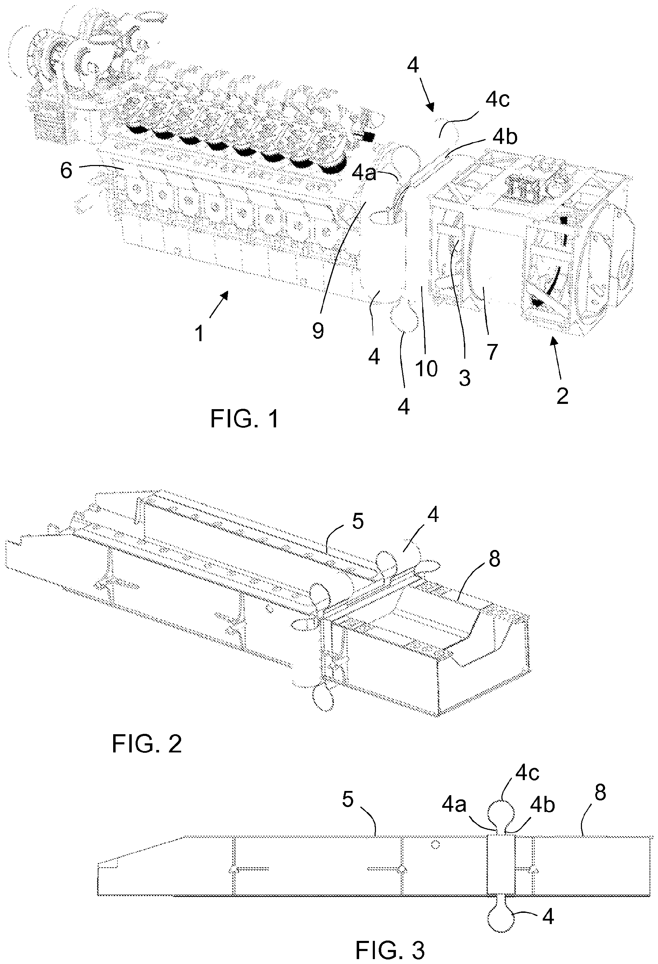

In figure 1 is shown an engine-generator set (hereinafter also genset) according to an embodiment of the invention comprising a vibration isolation arrangement. The genset comprises a generator 2, which can be used for producing electricity. An internal combustion engine 1 is coupled to the generator 2 for driving the generator 2. The engine 1 is a large piston engine having a cylinder bore of at least 150 mm and/or rated power of at least 150 kW/cylinder. In the embodiment of figure 1, the engine 1 is a V-engine having 16 cylinders, but the engine 1 can comprise any reasonable number of cylinders, which could also be arranged in line. The engine 1 comprises an engine block 6, in which the cylinders are arranged. The engine-generator set can be used, for instance, at a power plant connected to an electrical network or in a ship for producing electricity for a propulsion system or as an auxiliary engine.

The generator 2 comprises a body 7 and a shaft 3, which is coupled to a crankshaft of the engine 1. The engine 1 comprises a flywheel (not shown) that is attached to the crankshaft. The generator 2 is arranged at a flywheel end of the engine 1. The crankshaft of the engine 1 is arranged in parallel with the shaft 3 of the generator 2. The engine 1 and the generator 2 have a common rotation axis. The direction of the shaft 3 defines a longitudinal (or axial) direction of the genset.

Each of the engine 1 and the generator 2 is supported independently against a support surface, such as a floor of a power plant or a hull of a ship. Each of the engine 1 and the generator 2 can comprise an own base frame, which supports the device 1, 2 in the vertical direction. The term "base frame" refers here to a rigid, self-supporting platform, which is configured to carry an engine 1 or a generator 2 arranged on its upper surface. Each of the base frames can be, for instance, a steel structure or a reinforced concrete block. Instead of base frames, also fixing rails or other lighter elements could be used as the support structures of the engine 1 and the generator 2. Resilient mounting elements are arranged between the support structure of the engine 1 and the support surface. The purpose of the resilient mounting elements is to reduce transmission of vibrations from the engine 1 to the ground. Also the support structure of the generator 2 is resiliently supported against the support surface. Resilient mounting elements similar to the mounting elements of the engine 1 can be used for supporting the support structure of the generator 2. The support structure of the engine 1 is not directly attached to the support structure of the generator 2. The support structure of the engine 1 is thus separated from the support structure of the generator 2 so that vibrations of the engine 1 cannot be directly transmitted via the support structures to the generator 2.

The engine 1 is connected to the generator 2 via a vibration isolation arrangement. The vibration isolation arrangement is configured to be resilient in the longitudinal direction of the genset and to carry torques about the shaft 3 of the generator 2. The vibration isolation arrangement thus prevents transmission of vibrations from the engine 1 to the generator 2 and maintains a mutual angular position of the engine 1 and the generator 2. The generator 2 is thus prevented from turning relative to the engine 1. With the vibration isolation arrangement, transmission of vibrations from the engine 1 to the generator 2 is reduced in comparison to a rigid connection between an engine and a generator. An example of a rigid connection is a common base frame, which is widely used in gensets. The vibration isolation arrangement comprises one or more attachment elements 4. In the embodiment of figure 1, the arrangement comprises four attachment elements 4. The attachment elements 4 are spring elements, which can yield in the direction of the shaft 3 of the generator 2, i.e. in the longitudinal direction of the genset. Each attachment element 4 is stiffer in a direction that is perpendicular to the longitudinal direction of the shaft 3 of the generator 2 than in the direction of the shaft 3. Torsional stiffness of the vibration isolation arrangement about an axis that is parallel to the shaft 3 of the generator 2 is thus high. A predetermined force exerted on a point at which an attachment element 4 is attached to the engine 1 or the generator 2 causes a greater displacement when the force is parallel to the longitudinal direction of the genset compared to a force that is perpendicular to the longitudinal direction of the genset.

Each of the attachment elements 4 is attached both to the engine 1 and the generator 2. The attachment elements 4 are attached rigidly to the engine 1 and the generator 2. In the embodiment of figure 1, the attachment elements 4 are elongated spring elements. The longitudinal axes of the attachment elements 4 are perpendicular to the shaft 3 of the generator 2. The attachment elements 4 surround the coupling between the engine 1 and the generator 2 from four different directions so that each attachment element 4 is perpendicular in relation to the adjacent attachment elements 4. Opposite attachment elements 4 are arranged symmetrically in relation to the shaft 3 of the generator 2. By placing the attachment elements 4 around the shaft 3, displacement of the shaft 3 due to torque of the engine 1 can be minimized.

Each of the attachment elements 4 has a first attachment portion 4a and a second attachment portion 4b. A resilient portion 4c connects the first attachment portion 4a to the second attachment portion 4b. The resilient portion 4c is flexible and allows the first attachment portion 4a and the second attachment portion 4b to move towards each other when a force in the longitudinal direction of the genset is applied to the attachment portions 4a, 4b of the attachment element 4. The first attachment portion 4a faces the engine 1 and is attached to the engine 1 and the second attachment portion 4b faces the generator 2 and is attached to the generator 2. In the embodiment of figure 1, the attachment elements 4 are made of a sheet material, such as sheet metal. A suitable material for the attachment elements 4 is, for instance, steel. Also some other alloy could be used. A plate forming an attachment element 4 forms a perimeter that encircles a partially closed space. The desired properties of the attachment element 4, i.e. torsional stiffness and flexibility in the longitudinal direction of the genset are thus achieved via the shape of the resilient element. Each end of the plate forms a flange, which can be attached to the engine 1 or the generator 2. In the embodiment of figure 1, each attachment element 4 is formed of one plate that forms a curved perimeter. However, the attachment elements 4 could also consist of two or more plates that are attached to each other. In the embodiment of figure 1, the cross-sectional shape of the attachment element 4 is circular, but it could also be polygonal, such as triangle-shaped. Resilient elements 4 with a circular cross-section have good strength and are easy to manufacture. The cross-section could also be, for example, V-shaped or U-shaped. Instead of an open perimeter, an attachment element 4 could also have a closed perimeter having, for example, a circular or polygonal form.

In the embodiment of figure 1, the attachment elements 4 are attached to the engine block 6 and the body 7 of the generator 3. The attachment elements 4 are not directly attached to the engine block 6 and the body 7 of the generator 3, but the coupling between the engine 1 and the generator 2 is encircled by a first collar 9 and a second collar 10. The first collar 9 is attached rigidly to the engine block 6, and the second collar 10 is attached rigidly to the body 7 of the generator 3. Each of the attachment elements 4 connects the first collar 9 to the second collar 10. In the embodiment of figure 1, the vibration isolation arrangement forms a protective cover for the flywheel of the engine 1 and for the coupling between the engine 1 and the generator 2. The vibration isolation arrangement could also be formed by attaching the attachment elements 4 directly to the engine block 6 and the body 7 of the generator 2, which would make the construction simpler.

Figures 2 to 5 show another embodiment of the invention. In this embodiment, the vibration isolation arrangement is arranged between a base frame 5 of the engine 1 and a base frame 8 of the generator 2. The base frames 5, 8 are part of a support structure of the genset. Also in the embodiment of figures 2 to 5, the vibration isolation arrangement comprises a plurality of attachment elements 4. The shape of the attachment elements 4 is similar to the embodiment of figure 1. The base frames 5, 8 of the engine 1 and the generator 2 are separate support structures and there is thus no rigid connection between the base frame 5 of the engine 1 and the base frame 8 of the generator 2. Each base frame 5, 8 is resiliently supported against the ground with resilient mounting elements (not shown). The base frames 5, 8 of the embodiment of figures 2-5 are rigid, self-supporting steel structures.

In the embodiment of figures 2-5, each side of the joint between the base frame 5 of the engine 1 and the base frame 8 of the generator 2 is provided with at least one attachment element 4. Below the base frames 5, 8, the base frame 5 of the engine 1 is connected to the base frame 8 of the generator 2 with an attachment element 4 extending from one side of the support structure to the opposite side. On the sides of the joint, seen from an end of the support structure of the genset, the joint comprises attachment elements 4 extending from the lower surface of the support structure to the upper surface of the support structure. Above the base frames 5, 8, the joint comprises two attachment elements 4, which are arranged at a distance from each other so that the coupling between the engine 1 and the generator 2 can be accommodated into the space between the attachment elements 4.

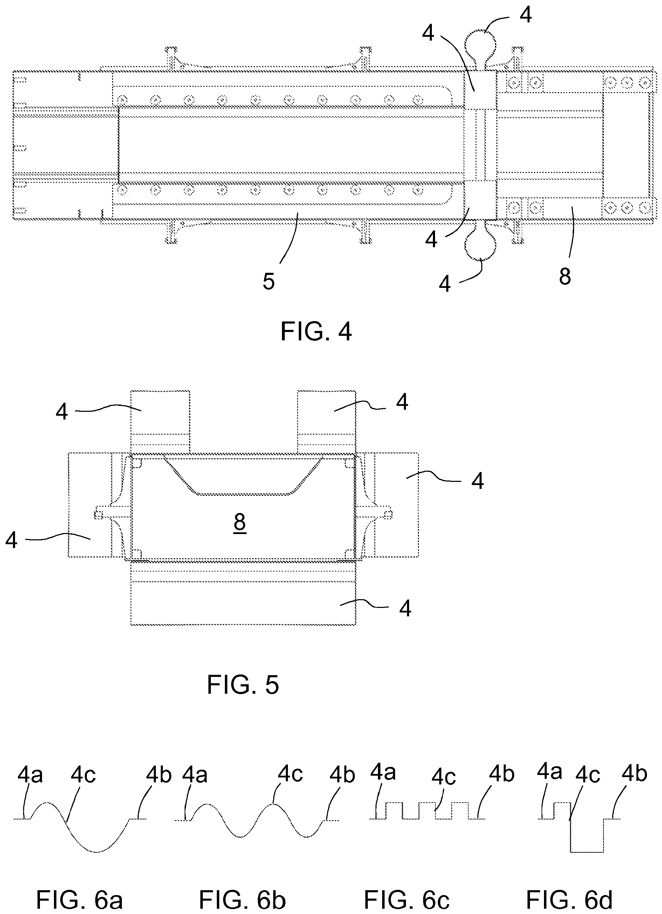

In the embodiments of figures 1 to 5, the resilient portion 4c of each attachment element 4 has a round cross-sectional shape. However, the resilient portion 4c could also have many other different shapes. Figures 6a to 6d show some examples of possible shapes. In the embodiment of figure 6a, the resilient portion 4c comprises two resilient sections. A first section is arranged adjacent to the first attachment portion 4a and a second section is arranged adjacent to the second attachment portion 4b. Each of the sections has a curved shape, but the sections have different dimensions. The second section has a larger radius than the first section. By providing the resilient portion with two sections with different dimensions, the characteristics of the attachment element 4 can be modified. In the embodiment of figure 6b, the resilient portion 4c has a corrugated shape. More exactly, the resilient portion has a shape of a sinusoidal wave. Also in the embodiment of figure 6c, the shape of the resilient portion is corrugated, but in this case it has a shape of a square wave. The embodiment of figure 6d is similar to the embodiment of figure 6a. The resilient portion 4c comprises two sections with different dimensions. However, the sections are not curved, but each section is formed of straight plate sections.

It will be appreciated by a person skilled in the art that the invention is not limited to the embodiments described above, but may vary within the scope of the appended claims.

## Claims

1. An engine-generator set comprising a generator (2) for producing electricity and an internal combustion engine (1) that is coupled to a shaft (3) of the generator (2) for driving the generator (2), the engine-generator set comprising a vibration isolation arrangement that is configured to carry torques about the shaft (3) of the generator (2) for maintaining a mutual angular position of the engine (1) and the generator (2) and to reduce transmission of vibrations from the engine (1) to the generator (2), wherein the vibration isolation arrangement comprises at least two attachment elements (4) connecting the engine (1) to the generator (2), wherein a first attachment element (4) is arranged on one side of the shaft (3) of the generator (2) and a second attachment element (4) is arranged on an opposite side of the shaft (3), each attachment element (4) having an elongated shape, each attachment element (4) comprising a first attachment portion (4a) that is attached to the engine (1) and a second attachment portion (4b) that is attached to the generator (2), wherein each attachment element (4) further comprises a resilient portion (4c) connecting the first attachment portion (4a) to the second attachment portion (4b), **characterized in that** the longitudinal axis of the attachment element (4) being perpendicular to the direction of the shaft (3) of the generator (2), that the resilient portion (4c) having a shape that is configured to make the resilient portion (4c) less stiff in the direction of the shaft (3) of the generator (2) than in a direction that is perpendicular to the direction of the shaft (3) and that the resilient portion (4c) of the attachment element (4) is made of a sheet material.

2. An engine-generator set according to claim 1, wherein the attachment element (4) is a one-piece part.

3. An engine-generator set according to claim 1 or 2, wherein the resilient portion (4c) is corrugated.

4. An engine-generator set according to any of the preceding claims, wherein the resilient portion (4c) comprises at least a first section and a second section adjacent to the first section in the direction of the shaft (3) of the generator (2), each of the first section and the second section being configured to be less stiff in the direction of the shaft (3) of the generator (2) than in a direction that is perpendicular to the direction of the shaft (3).

5. An engine-generator set according to claim 4, wherein the second section has different dimensions than the first section.

6. An engine-generator set according to any of the preceding claims, wherein the resilient portion (4c) comprises two U-shaped sections.

7. An engine-generator set according to claim 6, wherein the U-shaped sections are rounded.

8. An engine-generator set according to any of claims 1 to 5, wherein the resilient portion (4c) has a shape of a square wave.

9. An engine-generator set according to any of claims 1 to 7, wherein the resilient portion (4c) has a shape of a sinusoidal wave.

10. An engine-generator set according to claim 1 or 2, wherein the resilient portion (4c) has a rounded cross-sectional shape in a direction that is perpendicular to the direction of the shaft (3) of the generator (2).

11. An engine-generator set according to any of the preceding claims, wherein the arrangement comprises at least four attachment elements (4).

12. An engine-generator set according to any of the preceding claims, wherein the engine (1) is arranged on a base frame (5) and the generator (2) is arranged on a separate base frame (8) and the first attachment portion (4a) of the attachment element (4) is attached to the base frame (5) of the engine (1) and the second attachment portion (4b) is attached to the base frame (8) of the generator (2).

13. An engine-generator set according to any of claims 1 to 11, wherein the first attachment portion (4a) of the attachment element (4) is attached to the engine block (6) of the engine (1) and the second attachment portion (4b) is attached to the body (7) of the generator (2).

## Patentansprüche

1. Motor-Generator-Satz mit einem Generator (2) zur Stromerzeugung und einem mit einer Welle (3) des Generators (2) gekoppelten Verbrennungsmotor (1) zum Antrieb des Generators (2), wobei der Motor-Generator-Satz eine Schwingungsisolationsanordnung umfasst, die konfiguriert ist, um Drehmomente um die Welle (3) des Generators (2) zu übertragen, um eine gegenseitige Winkelposition des Motors (1) und des Generators (2) aufrechtzuerhalten und die Übertragung von Schwingungen vom Motor (1) zum Generator (2) zu reduzieren, wobei die Schwingungsisolierungsanordnung mindestens zwei Befestigungselemente (4) umfasst, die den Motor (1) mit dem Generator (2) verbinden, wobei ein erstes Befestigungselement (4) auf einer Seite der Welle (3) des Generators (2) angeordnet ist und ein zweites Befestigungselement (4) auf einer gegenüberliegenden Seite der Welle (3) angeordnet ist, wobei jedes Befestigungselement (4) eine längliche Form hat, wobei jedes Befestigungselement (4) einen an dem Motor (1) befestigten ersten Befestigungsabschnitt (4a) und einen an dem Generator (2) befestigten zweiten Befestigungsabschnitt (4b) umfasst, wobei jedes Befestigungselement (4) ferner einen elastischen Abschnitt (4c) umfasst, der den ersten Befestigungsabschnitt (4a) mit dem zweiten Befestigungsabschnitt (4b) verbindet, **dadurch gekennzeichnet, dass** die Längsachse des Befestigungselements (4) senkrecht zur Richtung der Welle (3) des Generators (2) ist, dass der elastische Abschnitt (4c) eine Form aufweist, die so konfiguriert ist, dass der elastische Abschnitt (4c) in Richtung der Welle (3) des Generators (2) weniger steif ist als in einer Richtung, die senkrecht zur Richtung des Welle (8) ist, und dass der elastische Abschnitt (4c) des Befestigungselements (4) aus einem Blattmaterial besteht.

2. Motor-Generator-Satz nach Anspruch 1, **dadurch gekennzeichnet, dass** das Befestigungselement (4) einstückig ist.

3. Motor-Generator-Satz nach Anspruch 1 oder 2, wobei der elastische Abschnitt (4c) gewellt ist.

4. Motor-Generator-Satz nach einem der vorhergehenden Ansprüche, wobei der elastische Abschnitt (4c) zumindest einen ersten Abschnitt und einen zweiten Abschnitt aufweist, der zum ersten Abschnitt in Richtung der Welle (3) des Generators (2) benachbart ist, wobei der erste Abschnitt und der zweite Abschnitt jeweils in Richtung der Welle (3) des Generators (2) weniger steif ausgebildet sind als in einer Richtung senkrecht zur Richtung der Welle (3).

5. Motor-Generator-Satz nach Anspruch 4, wobei der zweite Abschnitt andere Abmessungen als der erste Abschnitt hat.

6. Motor-Generator-Satz nach einem der vorhergehenden Ansprüche, wobei der elastische Abschnitt (4c) zwei U-förmige Abschnitte umfasst.

7. Motor-Generator-Satz nach Anspruch 6, wobei die U-förmigen Abschnitte abgerundet sind.

8. Motor-Generator-Satz nach einem der Ansprüche 1 bis 5, wobei der elastische Abschnitt (4c) eine Form einer Rechteckwelle hat.

9. Motor-Generator-Satz nach einem der Ansprüche 1 bis 7, wobei der elastische Abschnitt (4c) eine Form einer Sinuswelle hat.

10. Motor-Generator-Satz nach Anspruch 1 oder 2, wobei der elastische Abschnitt (4c) eine abgerundete Querschnittsform in einer Richtung hat, die senkrecht zur Richtung der Welle (3) des Generators (2) ist.

11. Motor-Generator-Satz nach einem der vorhergehenden Ansprüche, wobei die Anordnung mindestens vier Befestigungselemente (4) umfasst.

12. Motor-Generator-Satz nach einem der vorhergehenden Ansprüche, wobei der Motor (1) auf einem Grundrahmen (5) angeordnet ist und der Generator (2) auf einem separaten Grundgestell (8) angeordnet ist und der erste Befestigungsabschnitt (4a) des Befestigungselements (4) am Grundrahmen (5) des Motors (1) befestigt ist und der zweite Befestigungsabschnitt (4b) am Grundrahmen (8) des Generators (2) befestigt ist.

13. Motor-Generator-Satz nach einem der Ansprüche 1 bis 11, wobei der erste Befestigungsabschnitt (4a) des Befestigungselements (4) am Motorblock (6) des Motors (1) befestigt ist und der zweite Befestigungsabschnitt (4b) am Körper (7) des Generators (2) befestigt ist.

## Revendications

1. Ensemble moteur-générateur comprenant un générateur (2) pour produire de l'électricité et un moteur à combustion interne (1) qui est couplé à un arbre (3) du générateur (2) pour entraîner le générateur (2), l'ensemble moteur-générateur comprenant un agencement d'isolation de vibrations qui est configuré pour porter des couples autour de l'arbre (3) du générateur (2) pour maintenir une position angulaire mutuelle du moteur (1) et du générateur (2) et pour réduire la transmission de vibrations du moteur (1) au générateur (2), dans lequel l'agencement d'isolation de vibrations comprend au moins deux éléments de fixation (4) reliant le moteur (1) au générateur (2), dans lequel un premier élément de fixation (4) est agencé sur un côté de l'arbre (3) du générateur (2) et un second élément de fixation (4) est agencé sur un côté opposé de l'arbre (3), chaque élément de fixation (4) ayant une forme allongée, chaque élément de fixation (4) comprenant une première partie de fixation (4a) qui est fixée au moteur (1) et une seconde partie de fixation (4b) qui est fixée au générateur (2), dans lequel chaque élément de fixation (4) comprend en outre une partie élastique (4c) reliant la première partie de fixation (4a) à la seconde partie de fixation (4b), **caractérisé en ce que** l'axe longitudinal de l'élément de fixation (4) est perpendiculaire à la direction de l'arbre (3) du générateur (2), **en ce que** la partie élastique (4c) a une forme qui est configurée pour rendre la partie élastique (4c) moins rigide dans la direction de l'arbre (3) du générateur (2) que dans une direction qui est perpendiculaire à la direction de l'arbre (3) et **en ce que** la partie élastique (4c) de l'élément de fixation (4) est réalisée en un matériau en feuille.

2. Ensemble moteur-générateur selon la revendication 1, dans lequel l'élément de fixation (4) est une pièce monobloc.

3. Ensemble moteur-générateur selon la revendication, 1 ou 2, dans lequel la partie élastique (4c) est ondulée.

4. Ensemble moteur-générateur selon l'une quelconque des revendications précédentes, dans lequel la partie élastique (4c) comprend au moins une première section et une seconde section adjacente à la première section dans la direction de l'arbre (3) du générateur (2), chacune de la première section et de la seconde section étant configurée pour être moins rigide dans la direction de l'arbre (3) du générateur (2) que dans une direction qui est perpendiculaire à la direction de l'arbre (3).

5. Ensemble moteur-générateur selon la revendication 4, dans lequel la seconde section a des dimensions différentes de la première section.

6. Ensemble moteur-générateur selon l'une quelconque des revendications précédentes, dans lequel la partie élastique (4c) comprend deux sections en forme de U.

7. Ensemble moteur-générateur selon la revendication 6, dans lequel les sections en forme de U sont arrondies.

8. Ensemble moteur-générateur selon l'une quelconque des revendications 1 à 5, dans lequel la partie élastique (4c) a la forme d'une onde carrée.

9. Ensemble moteur-générateur selon l'une quelconque des revendications 1 à 7, dans lequel la partie élastique (4c) a la forme d'une onde sinusoïdale.

10. Ensemble moteur-générateur selon la revendication 1 ou 2, dans lequel la partie élastique (4c) a une forme transversale arrondie dans une direction qui est perpendiculaire à la direction de l'arbre (3) du générateur (2).

11. Ensemble moteur-générateur selon l'une quelconque des revendications précédentes, dans lequel l'agencement comprend au moins quatre éléments de fixation (4).

12. Ensemble moteur-générateur selon l'une quelconque des revendications précédentes, dans lequel le moteur (1) est agencé sur un bâti de base (5) et le générateur (2) est agencé sur un bâti de base séparé (8) et la première partie de fixation (4a) de l'élément de fixation (4) est fixée au bâti de base (5) du moteur (1) et la seconde partie de fixation (4b) est fixée au bâti de base (8) du générateur (2).

13. Ensemble moteur-générateur selon l'une quelconque des revendications 1 à 11, dans lequel la première partie de fixation (4a) de l'élément de fixation (4) est fixée au bloc moteur (6) du moteur (1) et la seconde partie de fixation (4b) est fixée au ccorps (7) du générateur (2).
